# EUROPEAN PATENT APPLICATION

(11) **EP 3 812 032 A1**
(43) Date of publication of application: **28.04.2021**
(21) Application number: 20202516.9
(22) Date of filing: 19.10.2020
(51) Int. Cl.: B01D 53/04

(54) **NITROGEN REMOVAL DEVICE, NITROGEN REMOVAL METHOD, NITROGEN REMOVAL PROGRAM, AND MODELING APPARATUS**

(30) Priority: 23.10.2019 JP 2019192879
(71) Applicant: Nabtesco Corporation, Tokyo 102-0093 (JP)
(72) Inventor: KATO, Tomotsugu, Tokyo, 102-0093 (JP); ABE, Kenshiro, Tokyo, 102-0093 (JP)
(74) Representative: Grünecker Patent- und Rechtsanwälte PartG mbB

(57) **Abstract**

A nitrogen removal device (60) includes a nitrogen removal unit (70), a recovery unit (73A, 73B, 74A, 74B, 75A, 75B, 76A, 76B), an information acquisition unit (81), and a selection unit (80). The nitrogen removal unit (70) removes nitrogen from a gas received therein. The recovery unit (73A, 73B, 74A, 74B, 75A, 75B, 76A, 76B) is capable of a plurality of different recovery processes for recovery of a nitrogen removal capacity of the nitrogen removal unit (70). The information acquisition unit (81) acquires given information. The selection unit (80) selects one of the plurality of different recovery processes based on the given information acquired by the information acquisition unit (81), causing nitrogen to be removed from the gas received in the nitrogen removal unit (70).

## Description

The present invention relates to a nitrogen removal device, a nitrogen removal method, a nitrogen removal program, and a modeling apparatus.

There has been known a modeling apparatus for fabricating a three-dimensional object by applying a laser to a powdery material. The modeling apparatus fabricates a three-dimensional object by applying in a chamber a laser to each of the layers corresponding to cross-sectional regions of the three-dimensional object such that the layers are solidified sequentially.

In the modeling apparatus disclosed in Japanese National Phase Laid-Open Patent Publication No. 2017-533996, the chamber is filled with an inert gas to reduce the oxygen content in an atmosphere. The modeling apparatus includes a gas recirculation circuit having an inlet and an outlet both connected to the chamber, such that the inert gas recirculates through the chamber. The gas recirculation circuit includes a getter for absorbing oxygen, nitrogen, and hydrogen from the recirculating gas.

In the modeling apparatus disclosed in Japanese National Phase Laid-Open Patent Publication No. 2017-533996, the getter continues absorbing nitrogen from the recirculating gas until it reaches its upper limit of the absorption amount and stops absorbing nitrogen, and therefore, a recovery process is required when the absorption amount reaches a management value. However, during a period in which the recovery process is performed until the absorption amount falls down from the management value to a predetermined value, the getter cannot meet an external request for absorbing nitrogen from the recirculating gas. This problem also applies to a nitrogen removal unit for removing nitrogen from a gas used in a device such as a glove box, in addition to the nitrogen removal unit for removing nitrogen from a gas used in a modeling apparatus.

In view of the foregoing circumstances, one object of the present invention is to provide a nitrogen removal device, a nitrogen removal method, a nitrogen removal program, and a modeling apparatus capable of various ways of recovery of the nitrogen removal unit.

A nitrogen removal device for addressing the above challenge includes a nitrogen removal unit, a recovery unit, an information acquisition unit, and a selection unit. The nitrogen removal unit removes nitrogen from a gas received therein. The recovery unit is capable of a plurality of different recovery processes for recovery of a nitrogen removal capacity of the nitrogen removal unit. The information acquisition unit acquires given information. The selection unit selects one of the plurality of different recovery processes based on the given information acquired by the information acquisition unit, causing nitrogen to be removed from the gas received in the nitrogen removal unit. With the above configuration, selecting a recovery process to be performed by the recovery unit based on the given information permits various ways of recovery of the nitrogen removal unit and makes it possible to select an effective recovery method.

The nitrogen removal device is preferably configured such that the plurality of different recovery processes include: a non-recovery process in which the nitrogen removal capacity of the nitrogen removal unit is not recovered; a first recovery process in which the nitrogen removal capacity is recovered in a first amount of time; and a second recovery process in which the nitrogen removal capacity is recovered in a second amount of time larger than the first amount of time. This configuration makes it possible to select the amount of time required for the recovery of the nitrogen removal unit.

The nitrogen removal device is preferably configured such that the nitrogen removal unit is one of a plurality of nitrogen removal units, and the selection unit performs the second recovery process on at least one of the plurality of nitrogen removal units. With the above configuration, since recovery of at least one of the plurality of nitrogen removal units is accomplished by the second recovery process, the nitrogen removal capacity is recovered to a higher level, making it possible to elongate the continuous operation time of the nitrogen removal device.

The nitrogen removal device is preferably configured such that the given information is operation information indicating an operation status of an external apparatus that discharges the gas to be received in the nitrogen removal unit. With the above configuration, since the recovery process is selected based on the operation information on the external apparatus, nitrogen can be removed without any impact on the external apparatus.

A nitrogen removal method for addressing the above challenge includes: an information acquisition step of acquiring given information; a selection step of selecting, based on the given information acquired in the information acquisition step, one of a plurality of different recovery processes for recovery of a nitrogen removal capacity of a nitrogen removal unit, the nitrogen removal unit being configured to remove nitrogen from a gas received therein; and a recovery step of performing the recovery process selected in the selection step to accomplish recovery of the nitrogen removal capacity of the nitrogen removal unit. With the above configuration, selection from the plurality of different recovery processes based on the given information permits various ways of recovery of the nitrogen removal unit and makes it possible to select an effective recovery method.

A nitrogen removal program for addressing the above challenge includes: an information acquisition step of acquiring given information; a selection step of selecting, based on the given information acquired in the information acquisition step, one of a plurality of different recovery processes for recovery of a nitrogen removal capacity of a nitrogen removal unit, the nitrogen removal unit being configured to remove nitrogen from a gas received therein; and a recovery step of performing the recovery process selected in the selection step to accomplish recovery of the nitrogen removal capacity of the nitrogen removal unit. The other aspect of the present invention provides a nitrogen removal program for causing a computer to execute the nitrogen removal method mentioned above. The nitrogen removal program may be stored on a computer-readable storage medium. With the above program, selection from the plurality of different recovery processes based on the given information permits various ways of recovery of the nitrogen removal unit and makes it possible to select an effective recovery method.

A modeling apparatus for addressing the above challenge includes a fabrication unit, a nitrogen removal unit, a recovery unit, and a selection unit. The fabrication unit fabricates a three-dimensional object by applying a laser beam to a powdery material stacked to a predetermined thickness and allowing the powdery material partially fused to solidify. The nitrogen removal unit removes nitrogen from a gas received therein, the nitrogen removal unit being disposed between a suction port through which the gas is sucked from the fabrication unit and a discharge port through which the gas is discharged into the fabrication unit. The recovery unit is capable of a plurality of different recovery processes for recovery of a nitrogen removal capacity of the nitrogen removal unit. The selection unit selects one of the plurality of different recovery processes based on given operation information on the fabrication unit, causing nitrogen to be removed from the gas received in the nitrogen removal unit. With the above configuration, a recovery process to be performed by the recovery unit is selected based on the given operation information on the fabrication unit that fabricates the three-dimensional object. This permits various ways of recovery of the nitrogen removal unit and makes it possible to select an effective recovery method.

Other aspects and advantages of the present invention will be made apparent from the following description, taken in conjunction with the accompanying drawings, illustrating by way of example the principles of the present invention.

The invention, together with objects and advantages thereof, may best be understood by reference to the following description of the presently preferred embodiments together with the accompanying drawings in which:
Fig. 1 shows a schematic configuration of a modeling apparatus including a nitrogen removal device according to a first embodiment of the present invention;
Fig. 2 is a block diagram showing an electrical configuration of the modeling apparatus according to the first embodiment;
Fig. 3 is a flow chart showing an operation of the nitrogen removal device according to the first embodiment;
Fig. 4 shows a schematic configuration of a modeling apparatus including a nitrogen removal device according to a second embodiment of the present invention; and
Fig. 5 is a flow chart showing an operation of the nitrogen removal device according to the second embodiment.

### First Embodiment

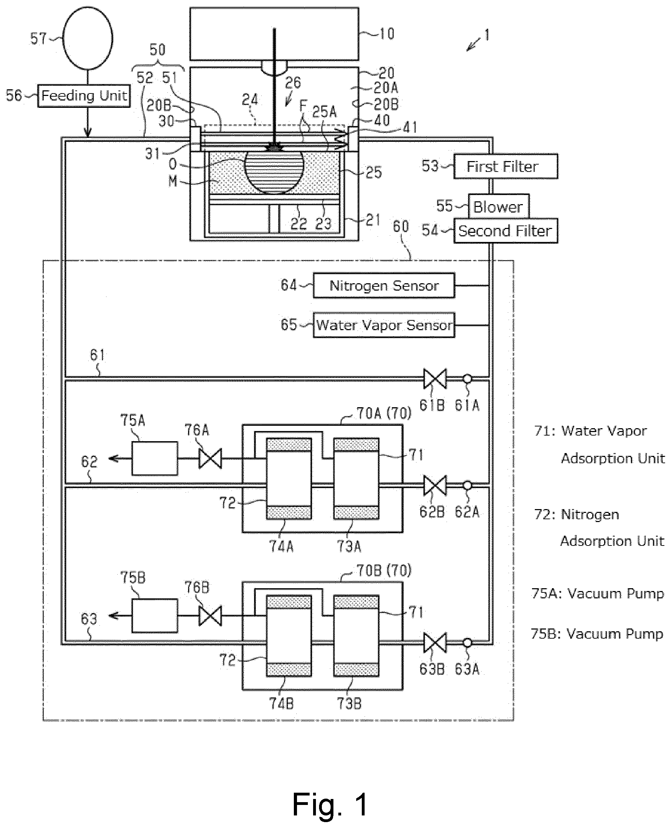

With reference to Fig. 1 to Fig. 3, the following describes a modeling apparatus including a nitrogen removal device according to a first embodiment of the present invention.

As shown in Fig. 1, a modeling apparatus 1 includes a fabrication unit 20 for fabricating a three-dimensional object, a fume removal flow forming unit 26 for feeding an inert gas to the fabrication unit 20, and a nitrogen removal device 60 for removing nitrogen from a circulating gas. The interior of the fabrication unit 20 is referred to as a chamber 20A. The chamber 20A is filled with an inert gas. An argon (Ar) gas is used as the inert gas. A fume removal flow F is a flow for removing fumes and includes what is called a laminar flow.

The fabrication unit 20 includes a container 21, a recoater 24, and a laser application unit 10. The container 21 includes a fabrication table 22 for supporting a three-dimensional object O fabricated. The recoater 24 stacks, on the fabrication table 22, a powder layer 25 made of a powdery material M to a predetermined thickness. The laser application unit 10 applies a laser beam to the powder layer 25 on the fabrication table 22.

The fabrication table 22 of the container 21 is movable up and down and is moved down by one-layer height each time one powder layer 25 is solidified. A fabrication plate 23 is disposed on the upper surface of the fabrication table 22 to have the three-dimensional object O placed thereon.

Each time one powder layer 25 is solidified, the recoater 24 stacks, on the fabrication plate 23, another powder layer 25 to a one-layer thickness. A surface of the powder layer 25 stacked on the fabrication table 22 (the fabrication plate 23) facing the laser application unit 10 is a laser irradiated surface 25A to be irradiated with a laser beam.

The laser application unit 10 uses a scanning system such as a galvanometer mirror to scan a laser beam emitted from a laser oscillator (not shown), so as to apply the laser beam to a desired position in the laser irradiated surface 25A of the powder layer 25.

The fume removal flow forming unit 26 feeds a new supply of inert gas into the chamber 20A and also circulates the inert gas thus fed into the chamber 20A. The fume removal flow forming unit 26 includes a circulation path 50 for circulating the inert gas in this manner.

The fume removal flow forming unit 26 includes a discharge unit 30 and a suction unit 40. The discharge unit 30 includes a plurality of discharge ports 31 for discharging into the chamber 20A the inert gas for removing fumes, and the suction unit 40 includes a plurality of suction ports 41 for sucking the inert gas discharged through the discharge ports 31. By use of the gas discharged through the plurality of discharge ports 31, the fume removal flow forming unit 26 forms a fume removal flow F flowing over the powder layer 25 along the laser irradiated surface 25A. The fume removal flow F is a gas flow formed in a layer form over the powder layer 25 along the laser irradiated surface 25A.

The circulation path 50 includes a first path 51 and a second path 52. The first path 51 extends from the discharge ports 31 to the suction ports 41 via the inside of the chamber 20A, and the second path 52 extends from the suction ports 41 to the discharge ports 31 via the outside of the chamber 20A. The second path 52 is a circulation path communicating between the suction ports 41 and the discharge ports 31 so that the inert gas is circulated from the suction ports 41 to the discharge ports 31. The nitrogen removal device 60 is provided on the second path 52.

Downstream of the suction ports 41 in the second path 52, a first filter 53 for removing fine powder particles from the inert gas is provided. Further, downstream of the first filter 53 in the second path 52, a second filter 54 is provided. Still further, downstream of the second filter 54 in the second path 52, the nitrogen removal device 60 is provided. The second filter 54 includes a blower 55. The blower 55 blows the inert gas into the nitrogen removal device 60. Since the first filter 53 and the second filter 54 filter off the fine powder particles before the inert gas is introduced into the nitrogen removal device 60, it is possible to inhibit clogging in the nitrogen removal device 60 and thus to reduce the frequency of replacing the filters.

The nitrogen removal device 60 is connected between a portion of the second path 52 downstream of the second filter 54 and the discharge unit 30 in the second path 52. The nitrogen removal device 60 includes three branch paths. The three branch paths join upstream of the discharge ports 31. The three branch paths include a first branch path 61 having no nitrogen removal unit, and a second branch path 62 and a third branch path 63 each having a nitrogen removal unit 70 for removing nitrogen from the inert gas received therein. The first branch path 61, the second branch path 62, and the third branch path 63 are parallel to one another.

The first branch path 61 includes no nitrogen removal unit but includes a first flowmeter 61A and a first switching valve 61B arranged in this order from upstream. The first flowmeter 61A is, for example, a diaphragm or ultrasonic flowmeter for measuring and outputting a flow rate of the inert gas flowing in the first branch path 61. The first switching valve 61B is, for example, a butterfly valve. In response to an external instruction, the first switching valve 61B changes the flow rate of the inert gas passing through the first branch path 61 or closes the first branch path 61.

The second branch path 62 includes a second flowmeter 62A and a second switching valve 62B positioned upstream of the first nitrogen removal unit 70A (70) and arranged in this order from upstream. The second flowmeter 62A is, for example, a diaphragm or ultrasonic flowmeter for measuring and outputting a flow rate of the inert gas flowing in the second branch path 62. The second switching valve 62B is, for example, a butterfly valve. In response to an external instruction, the second switching valve 62B changes the flow rate of the inert gas passing through the second branch path 62 or closes the second branch path 62.

The third branch path 63 includes a third flowmeter 63A and a third switching valve 63B positioned upstream of the second nitrogen removal unit 70B (70) and arranged in this order from upstream. The third flowmeter 63A is, for example, a diaphragm or ultrasonic flowmeter for measuring and outputting a flow rate of the inert gas flowing in the third branch path 63. The third switching valve 63B is, for example, a butterfly valve. In response to an external instruction, the third switching valve 63B changes the flow rate of the inert gas passing through the third branch path 63 or closes the third branch path 63.

The nitrogen removal units 70 each include a water vapor adsorption unit 71 for reducing a concentration of water vapor contained in the inert gas passing through the second branch path 62 or the third branch path 63. The water vapor adsorption unit 71 includes a filter containing a hollow fiber membrane for removing water vapor or a filter containing silica gel or zeolite for adsorbing water vapor. The water vapor adsorption unit 71 can recover the nitrogen removal capacity when it is heated at a temperature of 200°C or higher to remove water vapor adsorbed thereon. For this purpose, the water vapor adsorption unit 71 of the first nitrogen removal unit 70A is provided with a first heater 73A for heating the water vapor adsorption unit 71. Also, the water vapor adsorption unit 71 of the second nitrogen removal unit 70B is provided with a third heater 73B for heating the water vapor adsorption unit 71. Since the water vapor adsorption units 71 need to be heated to a high temperature, the amount of time required for removing water vapor by heating is about ten hours, including the time required for cooling.

The nitrogen removal units 70 each include a nitrogen adsorption unit 72 for reducing a concentration of nitrogen contained in the inert gas passing through the second branch path 62 or the third branch path 63. The nitrogen adsorption unit 72 includes an adsorbent containing zeolite that adsorbs nitrogen. The nitrogen adsorption unit 72 adsorbs a smaller amount of nitrogen when the inert gas contains water vapor. Therefore, the water vapor adsorption unit 71 is provided upstream of the nitrogen adsorption unit 72.

The nitrogen adsorption unit 72 can recover its nitrogen removal capacity when it is heated at a temperature of 200°C or higher to remove nitrogen and water vapor adsorbed thereon. For this purpose, the nitrogen adsorption unit 72 of the first nitrogen removal unit 70A is provided with a second heater 74A for heating the nitrogen adsorption unit 72. Also, the nitrogen adsorption unit 72 of the second nitrogen removal unit 70B is provided with a fourth heater 74B for heating the nitrogen adsorption unit 72. Since the nitrogen adsorption units 72 need to be heated to a high temperature, the amount of time required for removing nitrogen by heating is about ten hours, including the time required for cooling. The second heater 74A and the fourth heater 74B each operate as a recovery unit capable of a recovery process for recovery of the nitrogen removal capacities of the nitrogen removal units 70A, 70B, respectively. The second heater 74A and the fourth heater 74B heat the nitrogen removal units 70 to remove nitrogen and water vapor from the nitrogen removal units 70A, 70B, such that the nitrogen removal units 70 recover the capacities to reduce a concentration of nitrogen contained in the inert gas. This operation corresponds to the recovery process. The recovery of the capacities of the nitrogen removal units 70A, 70B accomplished by the recovery process varies from a degree at which the nitrogen removal capacity is recovered slightly from its lowest state to a degree at which the nitrogen removal capacity is recovered to 100 percent.

The nitrogen adsorption units 72 can recover the nitrogen removal capacities by evacuating the interior of the nitrogen adsorption units 72 instead of heating, so as to remove only nitrogen, but not water vapor, adsorbed on the nitrogen adsorption units 72. For this purpose, a first vacuum pump 75A is provided to evacuate the interior of the water vapor adsorption unit 71 of the first nitrogen removal unit 70A and the interior of the nitrogen adsorption unit 72 of the first nitrogen removal unit 70A. A fourth switching valve 76A is provided on a connection pipe connecting the first vacuum pump 75A to the water vapor adsorption unit 71 and the nitrogen adsorption unit 72. The fourth switching valve 76A switches between an open state and a closed state. Also, a second vacuum pump 75B is provided to evacuate the interior of the water vapor adsorption unit 71 of the second nitrogen removal unit 70B and the interior of the nitrogen adsorption unit 72 of the second nitrogen removal unit 70B. A fifth switching valve 76B is provided on a connection pipe connecting the second vacuum pump 75B to the water vapor adsorption unit 71 and the nitrogen adsorption unit 72. The fifth switching valve 76B switches between an open state and a closed state. The amount of time required for the recovery by vacuuming is only the time for degassing. The first vacuum pump 75A, the fourth switching valve 76A, the second vacuum pump 75B, and the fifth switching valve 76B each operate as a recovery unit capable of a plurality of different recovery processes for recovery of the nitrogen removal capacities of the nitrogen removal units 70A, 70B. By means of the first vacuum pump 75A, the fourth switching valve 76A, the second vacuum pump 75B, and the fifth switching valve 76B, the nitrogen removal units 70 are degassed to remove nitrogen and water vapor from the nitrogen removal units 70, such that the nitrogen removal units 70 recover the capacities to reduce a concentration of nitrogen contained in the inert gas. This operation corresponds to the recovery process. That is, the second heater 74A and the fourth heater 74B perform a different step of the recovery process than the first vacuum pump 75A and the second vacuum pump 75B do on the first nitrogen removal unit 70A and the second nitrogen removal unit 70B, respectively.

Upstream of the discharge ports 31 in the second path 52, a feeding unit 56 for feeding a new supply of inert gas is provided. While the modeling apparatus 1 is in operation, the feeding unit 56 continues to introduce a new supply of inert gas in a constant amount from a tank 57 into the second path 52.

The fume removal flow forming unit 26 forms the fume removal flow F over the powder layer 25. A height and a width of the fume removal flow F can be desirably determined depending on, for example, a material or a method used for fabrication. The fume removal flow F is preferably formed to have a height covering a scattering height of a sputtered substance.

The discharge ports 31 are arranged in the discharge unit 30 and the suction ports 41 are arranged in the suction unit 40 in such a manner that the discharge ports 31 and the suction ports 41 are opposed to each other with the powder layer 25 interposed therebetween. The discharge unit 30 and the suction unit 40 are disposed on opposed side walls 20B of the chamber 20A, respectively.

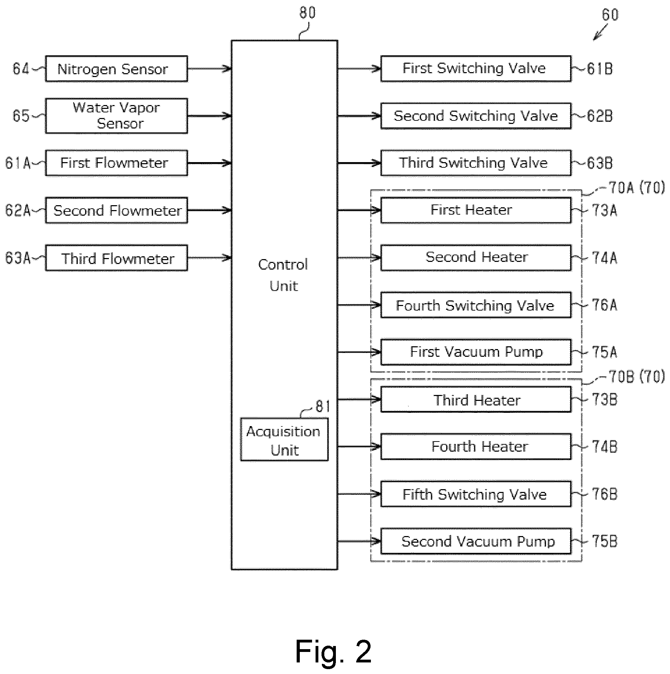

Next, an electrical configuration of the modeling apparatus 1 will be described with reference to Fig. 2.

As shown in Fig. 2, the modeling apparatus 1 includes a control unit 80 for controlling the modeling apparatus 1. In order to fabricate the three-dimensional object O, the control unit 80 controls the container 21, the recoater 24, and the laser application unit 10 and also performs control for circulating the inert gas into the chamber 20A. The control unit 80 may be formed of, for example, a computer including a CPU, a RAM, and a ROM, and the operation of the control unit 80 is controlled in accordance with a program stored on a computer-readable medium, such as the ROM, for example, a nitrogen removal program which will be described later. Fig. 2 does not show elements related to fabrication of the three-dimensional object O itself. The control unit 80 also operates as a selection unit that selects one of the plurality of different recovery processes on the nitrogen removal units 70, causing nitrogen to be removed from the inert gas received in the nitrogen removal units 70.

The nitrogen removal device 60 includes a nitrogen sensor 64 and a water vapor sensor 65 downstream of the second filter 54. The nitrogen sensor 64 measures a concentration of nitrogen contained in the inert gas flowing from the second filter 54 and outputs a measurement result to the control unit 80. The water vapor sensor 65 measures a concentration of water vapor contained in the inert gas flowing from the second filter 54 and outputs a measurement result to the control unit 80. The first flowmeter 61A, the second flowmeter 62A, and the third flowmeter 63A each measure a flow rate and output a measurement result to the control unit 80.

The control unit 80 controls a degree of opening of the first switching valve 61B in the first branch path 61 so as to adjust a flow rate of the inert gas passing through the first branch path 61. The control unit 80 controls a degree of opening of the second switching valve 62B in the second branch path 62 so as to adjust a flow rate of the inert gas passing through the second branch path 62. The control unit 80 controls a degree of opening of the third switching valve 63B in the third branch path 63 so as to adjust a flow rate of the inert gas passing through the third branch path 63. The control unit 80 controls the first switching valve 61B, the second switching valve 62B, and the third switching valve 63B so as to control circulation of the inert gas in the circulation path 50.

The control unit 80 determines that the chamber 20A has been filled with the inert gas after startup of the modeling apparatus 1. Immediately after startup of the modeling apparatus 1 (a stage of preparing for fabrication), a nitrogen concentration and a water vapor concentration in the chamber 20A are high, and thus an absorption amount of the nitrogen removal unit 70 may possibly reach its upper limit. To avoid this, the control unit 80 opens the first switching valve 61B to allow only the first branch path 61 to communicate with the second path 52 and circulate the inert gas only into the first branch path 61 until the nitrogen concentration is equal to or less than a predetermined value.

The control unit 80 determines whether or not the chamber 20A has been filled with the inert gas based on whether or not the nitrogen concentration in the chamber 20A has been equal to or less than the predetermined value. When the nitrogen concentration in the chamber 20A has been equal to or less than the predetermined value, the control unit 80 determines that the chamber 20A has been filled with the inert gas, and then opens the second switching valve 62B to allow the second branch path 62 to communicate with the second path 52 or opens the third switching valve 63B to allow the third branch path 63 to communicate with the second path 52.

The control unit 80 includes an acquisition unit 81 that acquires operation information on the modeling apparatus 1, or an external apparatus to which the nitrogen removal device 60 is connected. This operation information is referred to as given information. The acquisition unit 81 acquires the operation information indicating, for example, whether or not the modeling apparatus 1 has been started up and whether or not the modeling apparatus 1 is fabricating an object. The acquisition unit 81 corresponds to the information acquisition unit.

The control unit 80 performs a recovery process based on the operation information acquired by the acquisition unit 81. Specifically, the control unit 80 performs switching between a non-recovery process, a first recovery process, and a second recovery process. In the non-recovery process, the nitrogen removal capacities of the nitrogen removal units 70A, 70B are not recovered, and the inert gas is allowed to pass. In the first recovery process, the nitrogen removal capacities are recovered by vacuuming only. In the second recovery process, the nitrogen removal capacities are recovered by heating concurrent with vacuuming. The second recovery process performed by vacuuming and heating requires a second amount of time that is larger than a first amount of time required for the first recovery process performed by vacuuming only. The second amount of time for the second recovery process is set for full recovery of the nitrogen removal units 70. The second recovery process preferably includes water vapor removal in addition to nitrogen removal.

The control unit 80 allows only the first branch path 61 to communicate with the second path 52 after the modeling apparatus 1 is started up until the chamber 20A is filled with the inert gas. Specifically, the control unit 80 opens the first switching valve 61 B and closes the second switching valve 62B and the third switching valve 63B.

When the chamber 20A has been filled with the inert gas, the control unit 80 allows the second branch path 62 or the third branch path 63 to communicate with the second path 52. Specifically, the control unit 80 closes the first switching valve 61B and opens the second switching valve 62B or the third switching valve 63B.

The control unit 80 performs the first recovery process on one of the second branch path 62 and the third branch path 63 that is not in communication with the second path 52. Specifically, the control unit 80 performs the recovery process by vacuuming on the nitrogen removal unit 70 through which the inert gas is not passing. In the first recovery process, the control unit 80 opens the fourth switching valve 76A or the fifth switching valve 76B and actuates the first vacuum pump 75A or the second vacuum pump 75B to perform vacuuming, and stops the first heater 73A, the second heater 74A, the third heater 73B, and the fourth heater 74B.

The control unit 80 performs no recovery process on the other of the second branch path 62 and the third branch path 63 that is in communication with the second path 52 (non-recovery process). Specifically, in the non-recovery process, the control unit 80 closes the fourth switching valve 76A and the fifth switching valve 76B and stops the first vacuum pump 75A or the second vacuum pump 75B.

When switching conditions of the branch paths are satisfied, the control unit 80 performs switching from one of the second branch path 62 and the third branch path 63 that is in communication with the second path 52 to the other that is not in communication with the second path 52. The switching conditions are conditions leading to a breakthrough of the nitrogen adsorption unit 72. Examples of such conditions include the condition that the nitrogen concentration sensed by the nitrogen sensor 64 is equal to or greater than a predetermined value, the condition that the inert gas has been passing for the upper limit of time, the condition that the amount of the inert gas that has passed has reached the upper limit, and the condition that the adsorption amount calculated from the nitrogen concentration and the amount of the inert gas that has passed has reached the upper limit.

When the fabrication of the three-dimensional object O is ended, the control unit 80 opens the first switching valve 61B and closes the second switching valve 62B and the third switching valve 63B. The control unit 80 then performs the second recovery process on the first nitrogen removal unit 70A and the second nitrogen removal unit 70B. In the second recovery process, the control unit 80 actuates the first heater 73A and the third heater 73B to heat the water vapor adsorption units 71, and it also actuates the second heater 74A and the fourth heater 74B to heat the nitrogen adsorption units 72. Further, the control unit 80 opens the fourth switching valve 76A and the fifth switching valve 76B and actuates the first vacuum pump 75A and the second vacuum pump 75B for vacuuming.

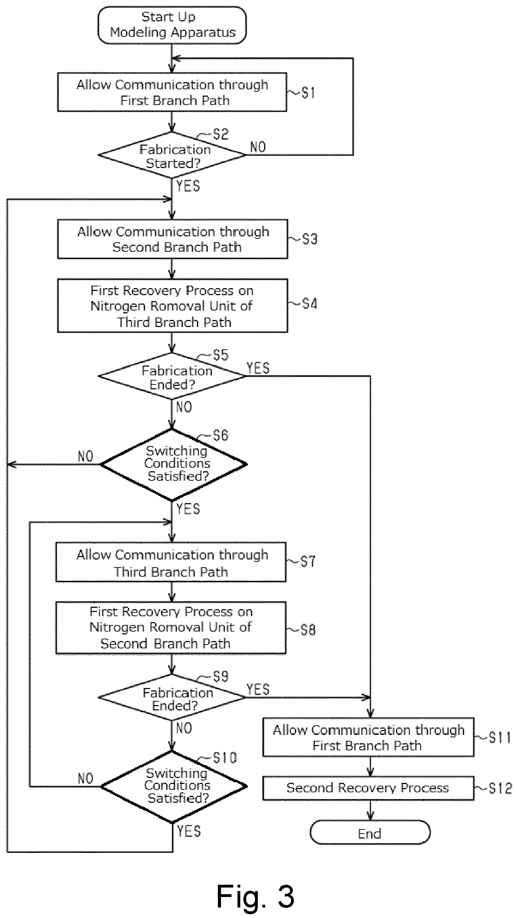

With additional reference to Fig. 3, the following describes the operation of the modeling apparatus 1 and the nitrogen removal device 60 configured as described above. The control unit 80 operates by a nitrogen removal method and a nitrogen removal program including an information acquisition step, a selection step, and a recovery step. Before the modeling apparatus 1 is started up, the first switching valve 61B, the second switching valve 62B, and the third switching valve 63B of the nitrogen removal device 60 are closed.

To start with, as shown in Fig. 3, the modeling apparatus 1 is started up, and the control unit 80 then feeds and circulates an inert gas so as to fill the chamber 20A with the inert gas. Specifically, the control unit 80 causes the feeding unit 56 to feed the inert gas into the circulation path 50, while driving the blower 55 to circulate the inert gas.

The control unit 80 allows communication through the first branch path 61 (step S1). Immediately after the startup of the modeling apparatus 1, the nitrogen concentration and the water vapor concentration in the chamber 20A are high, and thus the inert gas is allowed to pass through only the first branch path 61 having no nitrogen removal unit 70, so as to prevent the adsorption amount of the nitrogen removal units 70 from reaching its upper limit. Specifically, the control unit 80 opens the first switching valve 61B to allow the inert gas to pass through the first branch path 61.

The control unit 80 then determines whether or not the modeling apparatus 1 has started fabrication (step S2). Specifically, the acquisition unit 81 acquires the information on the start of fabrication from the control signal of the modeling apparatus 1. During the fabrication of the three-dimensional object O in the modeling apparatus 1, the air is emitted from the regions between the powdery particles and the regions around the operating parts of the apparatus. Therefore, it is necessary to remove nitrogen and other contents in the inert gas being circulated.

When determining that the modeling apparatus 1 has not started the fabrication (NO in step S2), the control unit 80 continues step S1 until the modeling apparatus 1 starts the fabrication.

On the other hand, when determining that the modeling apparatus 1 has started the fabrication (YES in step S2), the control unit 80 allows the second branch path 62 to communicate with the second path 52 (step S3). Specifically, the control unit 80 closes the first switching valve 61B and opens the second switching valve 62B to allow the inert gas to pass through the second branch path 62.

The control unit 80 then performs the first recovery process on the nitrogen removal unit 70 of the third branch path 63 (step S4). Specifically, the control unit 80 selects the first recovery process from the plurality of different recovery processes and performs switching from the non-recovery process to the first recovery process (the selection step). For recovery of the nitrogen adsorption unit 72 of the third branch path 63 through which the inert gas is not passing, the control unit 80 opens the fifth switching valve 76B and actuates the second vacuum pump 75B for vacuuming. The control unit 80 performs the first recovery process for a first amount of time. As a result, nitrogen is removed from the nitrogen adsorption unit 72 of the third branch path 63 to some degree. Step S3 and step S4 are either concurrent or sequential. When these steps are sequential, either may be the first. Step S4 corresponds to the recovery step.

After starting the fabrication, the modeling apparatus 1 produces the three-dimensional object O by alternating a process of stacking a powder layer 25 made of the powdery material M and a process of applying a laser beam to the laser irradiated surface 25A of the powder layer 25 so as to partially solidify the powder layer 25.

During application of a laser beam to the powder layer 25, the inert gas having a nitrogen concentration and a water vapor concentration reduced by the nitrogen removal device 60 forms the fume removal flow F along the laser irradiated surface 25A.

When a laser beam is applied to the laser irradiated surface 25A of the powder layer 25, fume is generated and a sputtered substance is scattered from a laser irradiated area. The fume generated from the laser irradiated area is immediately blown by the fume removal flow F and thus is sucked through the suction ports 41 without ascending to block a laser path. Furthermore, the sputtered substance scattered from the laser irradiated area is scattered into the fume removal flow F having a reduced nitrogen concentration and a reduced water vapor concentration, and thus it is possible to inhibit nitriding of the sputtered substance being scattered and also to inhibit falling of the sputtered substance nitrided. Moreover, the fume removal flow F is formed by the inert gas having the nitrogen concentration and the water vapor concentration reduced by the nitrogen removal device 60. This inhibits nitriding of the powdery material M of the powder layer 25 caused by the fume removal flow F. In this manner, the three-dimensional object O is fabricated while the inert gas having a reduced nitrogen concentration and a reduced water vapor concentration is fed into the chamber 20A, and thus it is possible to inhibit nitriding of the powdery material M, namely, nitriding of the three-dimensional object O.

Subsequently, the control unit 80 determines whether or not fabrication of the three-dimensional object O has been ended (step S5). Specifically, the acquisition unit 81 acquires the information on the end of fabrication from the control signal of the modeling apparatus 1. When the control unit 80 determines that fabrication of the three-dimensional object O has not been ended, or in other words, the three-dimensional object O is still being fabricated (NO in step S5), the control unit 80 then determines whether or not the switching conditions of the branch paths have been satisfied (step S6). Specifically, the control unit 80 determines whether or not the nitrogen adsorption unit 72 reaches a breakthrough. When determining that the switching conditions are not satisfied (NO in step S6), the control unit 80 repeats steps S3 to S5.

On the other hand, when determining that the switching conditions are satisfied (YES in step S6), the control unit 80 allows the third branch path 63, in which the adsorption amount of nitrogen has been reduced, to communicate with the second path 52 (step S7). Specifically, the control unit 80 closes the second switching valve 62B and opens the third switching valve 63B to allow the inert gas to pass through the third branch path 63.

The control unit 80 then performs the first recovery process on the nitrogen removal unit 70 of the second branch path 62 (step S8). Specifically, the control unit 80 selects the first recovery process from the plurality of different recovery processes and performs switching from the non-recovery process to the first recovery process (the selection step). For recovery of the nitrogen adsorption unit 72 of the second branch path 62 through which the inert gas is not passing, the control unit 80 opens the fourth switching valve 76A and actuates the first vacuum pump 75A for vacuuming. The control unit 80 performs the first recovery process for the first amount of time. As a result, nitrogen is removed from the nitrogen adsorption unit 72 of the second branch path 62. Step S7 and step S8 are either concurrent or sequential. When these steps are sequential, either may be the first. Step S8 corresponds to the recovery step.

Subsequently, the control unit 80 determines whether or not fabrication of the three-dimensional object O has been ended (step S9). When the control unit 80 determines that fabrication of the three-dimensional object O has not been ended, or in other words, the three-dimensional object O is still being fabricated (NO in step S9), the control unit 80 then determines whether or not the switching conditions of the branch paths have been satisfied (step S10). Specifically, the control unit 80 determines whether or not the nitrogen adsorption unit 72 reaches a breakthrough.

When determining that the switching conditions are not satisfied (NO in step S10), the control unit 80 repeats steps S7 to S9. On the other hand, when determining that the switching conditions are satisfied (YES in step S10), the control unit 80 proceeds to step S3.

When the control unit 80 determines that fabrication of the three-dimensional object O has been ended (YES in step S5, YES in step S9), the control unit 80 allows communication through the first branch path 61 (step S11). Specifically, since it is not necessary to remove nitrogen from the inert gas, the control unit 80 opens the first switching valve 61B and closes the second switching valve 62B and the third switching valve 63B, thereby allowing the first branch path 61 to communicate with the second path 52.

The control unit 80 then performs the second recovery process on the first nitrogen removal unit 70A of the second branch path 62 and the second nitrogen removal unit 70B of the third branch path 63 (step S12). Specifically, the control unit 80 selects the second recovery process from the plurality of different recovery processes and performs switching from the first recovery process to the second recovery process (the selection step). The control unit 80 actuates the first heater 73A and the third heater 73B to heat the water vapor adsorption units 71, and it also actuates the second heater 74A and the fourth heater 74B to heat the nitrogen adsorption units 72. Further, the control unit 80 opens the fourth switching valve 76A and the fifth switching valve 76B and actuates the first vacuum pump 75A and the second vacuum pump 75B for vacuuming of the water vapor adsorption units 71 and the nitrogen adsorption units 72. The control unit 80 performs the second recovery process for a second amount of time. As a result, water vapor adsorbed on the water vapor adsorption units 71 is removed to accomplish recovery of the water vapor adsorption units 71, and nitrogen adsorbed on the nitrogen adsorption units 72 is removed to accomplish recovery of the nitrogen adsorption units 72. Step S12 corresponds to the recovery step.

Advantageous effects of the first embodiment will be now described.
(1) Selecting a recovery process based on the operation information on the molding apparatus 1 permits various ways of recovery of the nitrogen removal units 70 and makes it possible to select an effective recovery method.
(2) Switching between the non-recovery process, the first recovery process, and the second recovery process makes it possible to select the amount of time required for the recovery of the nitrogen removal units 70.
(3) Since the recovery process is performed based on the operation information on the modeling apparatus 1 acquired by the acquisition unit 81, nitrogen can be removed without any impact on the modeling apparatus 1.
(4) Since full recovery is possible for at least one of the plurality of nitrogen removal units 70, the continuous operation time of the nitrogen removal device 60 can be elongated.

### Second Embodiment

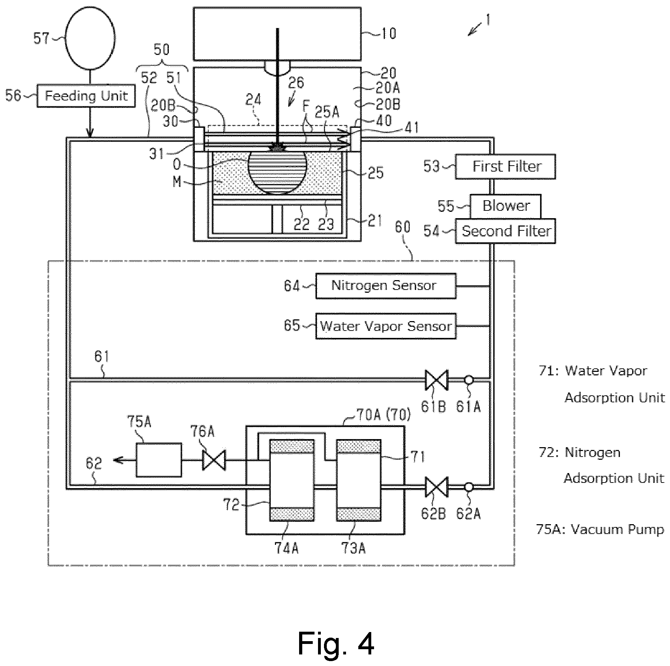

With reference to Fig. 4 to Fig. 5, the following describes a modeling apparatus including a nitrogen removal device according to a second embodiment of the present invention. The nitrogen removal device of this embodiment is different from that of the first embodiment in that it includes only one branch path having the nitrogen removal unit. The following description will be focused on the difference from the first embodiment.

As shown in Fig. 4, the nitrogen removal device 60 does not include the third branch path described for the first embodiment.

The control unit 80 performs the first recovery process by vacuuming while the modeling apparatus 1 is not emitting a laser beam. The control unit 80 allows the first branch path 61 to communicate with the second path 52 while the laser beam is not emitted.

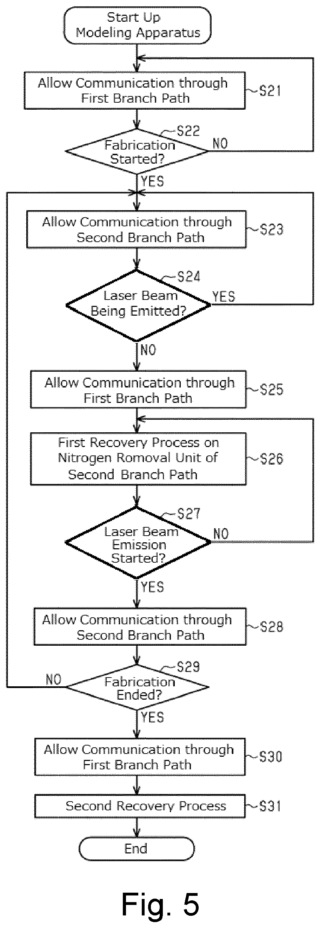

With additional reference to Fig. 5, the following describes the operation of the modeling apparatus 1 and the nitrogen removal device 60 configured as described above. The control unit 80 operates by a nitrogen removal method and a nitrogen removal program including a nitrogen removal step, a switching step, and a recovery step. Before the modeling apparatus 1 is started up, the first switching valve 61B and the second switching valve 62B of the nitrogen removal device 60 are closed.

To start with, as shown in Fig. 5, the modeling apparatus 1 is started up, and the control unit 80 then feeds and circulates an inert gas so as to fill the chamber 20A with the inert gas. Specifically, the control unit 80 causes the feeding unit 56 to feed the inert gas into the circulation path 50, while driving the blower 55 to circulate the inert gas.

The control unit 80 allows communication through the first branch path 61 (step S21). The control unit 80 then determines whether or not the modeling apparatus 1 has started fabrication (step S22). When determining that the modeling apparatus 1 has not started the fabrication (NO in step S22), the control unit 80 continues step S21 until the modeling apparatus 1 starts the fabrication.

On the other hand, when determining that the modeling apparatus 1 has started the fabrication (YES in step S22), the control unit 80 allows the second branch path 62 to communicate with the second path 52 (step S23). Specifically, the control unit 80 closes the first switching valve 61B and opens the second switching valve 62B to allow the inert gas to pass through the second branch path 62.

Subsequently, the control unit 80 determines whether or not a laser beam is being emitted (step S24). Specifically, the acquisition unit 81 acquires from the control signal of the modeling apparatus 1 the information on whether or not a laser beam is being emitted (the information acquisition step). When determining that a laser beam is being emitted (YES in step S24), the control unit 80 repeats steps S23, S24 until the emission of the laser beam is ended.

On the other hand, when determining that the laser beam is not being emitted (NO in step S24), the control unit 80 allows the first branch path 61 to communicate with the second path 52 (step S25). Specifically, the control unit 80 closes the second switching valve 62B and opens the first switching valve 61B to allow the inert gas to pass through the first branch path 61.

The control unit 80 then performs the first recovery process on the nitrogen adsorption unit 72 of the second branch path 62 (step S26). Specifically, the control unit 80 selects the first recovery process from the plurality of different recovery processes and performs switching from the non-recovery process to the first recovery process (the selection step). For recovery of the nitrogen adsorption unit 72 of the second branch path 62, the control unit 80 opens the fourth switching valve 76A and actuates the first vacuum pump 75A for vacuuming. The control unit 80 performs the first recovery process for the first amount of time. As a result, nitrogen is removed from the nitrogen adsorption unit 72 of the second branch path 62 to some degree. Step S26 corresponds to the recovery step.

Subsequently, the control unit 80 determines whether or not the emission of a laser beam is about to be started (step S27). Specifically, the control unit 80 determines that the emission of the laser beam is about to be started when coating of the powdery material M and other preparation for forming the powder layer 25 are ended. When determining that the emission of the laser beam is not about to be started (NO in step S27), the control unit 80 repeats steps S26, S27.

On the other hand, when determining that the emission of the laser beam is about to be started (YES in step S27), the control unit 80 allows the second branch path 62, in which the adsorption amount of nitrogen has been reduced, to communicate with the second path 52 (step S28). Specifically, the control unit 80 closes the first switching valve 61B and opens the second switching valve 62B to allow the inert gas to pass through the second branch path 62.

Subsequently, the control unit 80 determines whether or not fabrication of the three-dimensional object O has been ended (step S29). When determining that fabrication of the three-dimensional object O has not been ended, or in other words, the three-dimensional object O is still being fabricated (NO in step S29), the control unit 80 then proceeds to step S22.

On the other hand, when determining that fabrication of the three-dimensional object O has been ended (YES in step S29), the control unit 80 allows communication through the first branch path 61 (step S30). Specifically, since it is not necessary to remove nitrogen from the inert gas, the control unit 80 opens the first switching valve 61 B and closes the second switching valve 62B, thereby allowing the first branch path 61 to communicate with the second path 52.

The control unit 80 then performs the second recovery process on the first nitrogen removal unit 70A of the second branch path 62 (step S31). Specifically, the control unit 80 selects the second recovery process (the switching step). The control unit 80 actuates the first heater 73A to heat the water vapor adsorption unit 71, and it also actuates the second heater 74A to heat the nitrogen adsorption unit 72. Further, the control unit 80 opens the fourth switching valve 76A and actuates the first vacuum pump 75A for vacuuming of the water vapor adsorption unit 71 and the nitrogen adsorption unit 72. The control unit 80 performs the second recovery process for the second amount of time. As a result, water vapor adsorbed on the water vapor adsorption unit 71 is removed to accomplish recovery of the water vapor adsorption unit 71, and nitrogen adsorbed on the nitrogen adsorption unit 72 is removed to accomplish recovery of the nitrogen adsorption unit 72. Step S31 corresponds to the recovery step.

Advantageous effects of the second embodiment will be now described. The following advantageous effect is obtained in addition to the advantageous effects (1) to (3) of the first embodiment.
(5) Configuration with only one branch path having the nitrogen removal unit 70 also permits various ways of recovery of the nitrogen removal unit 70 and makes it possible to select an effective recovery method.

### Other Embodiments

The above embodiments can be modified as described below. The above embodiments and the following modifications can be implemented in combination to the extent where they are technically consistent with each other.

In the above embodiments, it is also possible that an oxygen removal device is provided on the second path 52 of the modeling apparatus 1 to remove oxygen contained in the inert gas. This inhibits oxidation of the three-dimensional object O or the powdery material M.

In the first embodiment, the branch paths are switched when the switching conditions of the branch paths are satisfied. It is also possible that the switching conditions of the branch paths additionally include the condition that the laser beam is not being emitted, and the branch paths are switched when the switching conditions of the branch paths are satisfied. This prevents the fabrication from being impacted by the disturbance of the gas flow caused by switching of the branch paths.

In the above embodiments, the recovery is supposed to be accomplished by performing the first recovery process for the first amount of time and performing the second recovery process for the second amount of time. Alternatively, instead of performing the first recovery process and the second recovery process in preset amounts of time, it is also possible to determine the necessities of these processes depending on whether or not the amounts of nitrogen and water vapor measured in the vacuumed air are equal to or less than respective preset values.

Further, it is also possible that the first recovery process and the second recovery process employ the same recovery method, and the second recovery process is performed in the second amount of time that is larger than the first amount of time for the first recovery process. This makes it possible to select the amount of time required for the recovery of the nitrogen removal units.

In the above embodiments, the recovery processes selected by the control unit 80 are not limited to the non-recovery process, vacuuming, heating, and combinations thereof. Any other methods that can accomplish recovery of the nitrogen removal units can be employed. Further, the recovery process may employ at least one of vacuuming, heating, and other methods, or may be a combination thereof.

In the recovery process of the above embodiments, vacuuming may be replaced with gas flow that causes a large amount of gas to pass to remove water vapor adsorbed on the water vapor adsorption units 71 and nitrogen adsorbed on the nitrogen adsorption units 72.

In the above embodiments, the control unit 80 opens the first switching valve 61B to allow only the first branch path 61 to communicate with the second path 52 and circulate the inert gas only into the first branch path 61 until the nitrogen concentration is equal to or less than a predetermined value. Alternatively, since the recovery process of the nitrogen removal device 60 can be readily performed, it is also possible that removal of nitrogen is started during preparation for the fabrication. Specifically, irrespective of the nitrogen concentration, the second branch path 62 or the third branch path 63 may be allowed to communicate with the second path 52 to remove nitrogen.

In the above embodiments, the given information is the operation information on the modeling apparatus 1. Alternatively, it is also possible that the given information is operation information on an external apparatus connected with the nitrogen removal device or a switch signal for an instruction to perform the recovery process of the nitrogen removal device. The switch signal may be generated by manual switch operation.

In the above embodiments, the control unit 80 of the modeling apparatus 1 operates as a selection unit that selects the recovery process of the nitrogen removal units 70. Alternatively, it is also possible that a selection unit that selects the recovery process of the nitrogen removal units 70 may be provided as separate from the control unit of the modeling apparatus 1.

In the above embodiments, the external apparatus for which the nitrogen removal device is used is the modeling apparatus 1. It is also possible that the nitrogen removal device is used to remove nitrogen from a gas received from an external device such as a glove box.

It should be apparent to those skilled in the art that the present invention may be embodied in many other specific forms without departing from the scope of the invention. For example, one or more of the components may be omitted from the components described in the embodiments (or one or more aspects thereof). Further, components in different embodiments may be appropriately combined.

The present examples and embodiments are to be considered as illustrative and not restrictive, and the invention is not to be limited to the details given herein, but may be modified within the scope and equivalence of the appended claims.

## Claims

1. A nitrogen removal device (60) **characterized by**:
a nitrogen removal unit (70) that removes nitrogen from a gas received therein;
a recovery unit (73A, 73B, 74A, 74B, 75A, 75B, 76A, 76B) capable of a plurality of different recovery processes for recovery of a nitrogen removal capacity of the nitrogen removal unit (70);
an information acquisition unit (81) that acquires given information; and
a selection unit (80) that selects one of the plurality of different recovery processes based on the given information acquired by the information acquisition unit (81), causing nitrogen to be removed from the gas received in the nitrogen removal unit (70).

2. The nitrogen removal device (60) of claim 1, wherein the plurality of different recovery processes include: a non-recovery process in which the nitrogen removal capacity of the nitrogen removal unit (70) is not recovered; a first recovery process in which the nitrogen removal capacity is recovered in a first amount of time; and a second recovery process in which the nitrogen removal capacity is recovered in a second amount of time larger than the first amount of time.

3. The nitrogen removal device (60) of claim 2,
wherein the nitrogen removal unit (70) is one of a plurality of nitrogen removal units (70), and
wherein the selection unit (80) performs the second recovery process on at least one of the plurality of nitrogen removal units (70).

4. The nitrogen removal device (60) of any one of claims 1 to 3, wherein the given information is operation information indicating an operation status of an external apparatus that discharges the gas to be received in the nitrogen removal unit (70).

5. A nitrogen removal method **characterized by**:
an information acquisition step of acquiring given information;
a selection step of selecting, based on the given information acquired in the information acquisition step, one of a plurality of different recovery processes for recovery of a nitrogen removal capacity of a nitrogen removal unit (70), the nitrogen removal unit (70) being configured to remove nitrogen from a gas received therein; and
a recovery step of performing the recovery process selected in the selection step to accomplish recovery of the nitrogen removal capacity of the nitrogen removal unit (70).

6. A nitrogen removal program **characterized by**:
an information acquisition step of acquiring given information;
a selection step of selecting, based on the given information acquired in the information acquisition step, one of a plurality of different recovery processes for recovery of a nitrogen removal capacity of a nitrogen removal unit (70), the nitrogen removal unit (70) being configured to remove nitrogen from a gas received therein; and
a recovery step of performing the recovery process selected in the selection step to accomplish recovery of the nitrogen removal capacity of the nitrogen removal unit (70).

7. A computer-readable storage medium storing a nitrogen removal program for causing a computer to execute the method of claim 5.

8. A modeling apparatus (1) **characterized by**:
a fabrication unit (20) that fabricates a three-dimensional object (O) by applying a laser beam to a powdery material (M) stacked to a predetermined thickness and allowing the powdery material (M) partially fused to solidify;
a nitrogen removal unit (70) that removes nitrogen from a gas received therein, the nitrogen removal unit (70) being disposed between a suction port (41) through which the gas is sucked from the fabrication unit (20) and a discharge port (31) through which the gas is discharged into the fabrication unit (20);
a recovery unit (73A, 73B, 74A, 74B, 75A, 75B, 76A, 76B) capable of a plurality of different recovery processes for recovery of a nitrogen removal capacity of the nitrogen removal unit (70); and
a selection unit (80) that selects one of the plurality of different recovery processes based on given operation information on the fabrication unit (20), causing nitrogen to be removed from the gas received in the nitrogen removal unit (70).
